# EUROPEAN PATENT SPECIFICATION

(11) **EP 1 145 096 B1**
(45) Date of publication and mention of the grant of the patent: **17.01.2007**
(21) Application number: 99963714.3
(22) Date of filing: 18.11.1999
(51) Int. Cl.: G06F 1/00, H04L 9/32, H04Q 7/32, G07F 7/10

(54) **MOBILE TELEPHONE AUTO PC LOGON**
MOBILTELEFON AUTO-PC-LOGON
MISE EN COMMUNICATION AUTOMATIQUE AVEC UN PC POUR UN TELEPHONE MOBILE

(30) Priority: 24.11.1998 US 109691 P; 04.06.1999 US 325349
(43) Date of publication of application: 17.10.2001
(73) Proprietor: TELEFONAKTIEBOLAGET LM ERICSSON (publ), 164 83 Stockholm (SE)
(72) Inventor: TUNELD, Mats, S-224 68 Lund (SE); HOLOSHKA, David, S-223 61 Lund (SE)
(74) Representative: Vigars, Christopher Ian
(86) International application number: PCT/SE1999/002115
(87) International publication number: WO 2000/031608

(56) References cited:
- EP-A- 0 708 547
- WO-A-93/09621
- WO-A-98/37663

## Description

### RELATED APPLICATIONS

This application is related to, and claims priority from U.S. Provisional Patent Application Serial No. 60/109,691, entitled "Mobile Phone Auto PC Logon", filed on November 24, 1998.

### BACKGROUND

The Global System for Mobile communication (GSM) describes a European standard for radiocommunication utilized by the corresponding Public Land Mobile Networks (PLMNs) in the region and in many other countries, which standard is intended to provide uniformity so that users can access radiocommunication systems throughout Europe and many other countries with minimal equipment compatibility problems.

In order for mobile telephones to operate in cellular telephone systems, the user of the mobile telephone must have a subscription with a network provider. In GSM systems, the mobile telephone is identified as having a subscription with a network provider through the use of a subscriber identity module (SIM). The SIM is a "smart card" comprising a processor and a memory. The SIM is designed such that it may be removed from one mobile telephone and inserted into another mobile telephone with which the user wishes to use her subscription. In GSM the SIM is used to protect the mobile network against fraudulent access and to ensure subscriber privacy. This is accomplished through authentication of the subscriber to prevent access of unregistered users, radio path ciphering, in particular ciphering of all subscriber information to prevent third party tapping, and subscriber identity protection to prevent subscriber location disclosure.

In order to protect information stored on computers, authentication mechanisms are used to verify that a user of a computer is an authorised user. Typical computer authentication mechanisms include a logon identification and a password. One way to increase the security of a computer system or network is to increase the number of characters in logon identifications and passwords. Further, some computer systems and networks require that the logon identification and password are changed on a regular basis, eg. every three months. Computer users find it difficult to memorise long authentication codes every few months. Accordingly, what is needed is a secure way for the user to authenticate a computer system without having to memorise a logon identification and password.

WO98/37663 discloses a method for checking authorisation, in which a smart card of a mobile telephone is provided with an encryption key with which a microprocessor is induced, when a suitable code is entered by a user, to perform a calculation based on the encryption key and at least one numbers entered by a user, the result of the calculation comprising a signature, said signature and said at least one number being sent to a system comprising a computer in which said encryption key has been stored, said computer being programmed to carry out said calculation to obtain said signature and then to compare the latter signature with the first-mentioned signature.

In EP 0708547, a customer seeking credit activates his or her cellular telephone, authenticates the cellular telephone with his cellular service provider's base station and proceeds to establish a connection to obtain credit. Credit is obtained by sending a unique sequence to the cellular service provider that is different from the normal sequence of numbers that correspond to a telephone number of the called party. That sequence may include a merchant ID code and the amount of credit desired. In an application where only authentication is important, the random signal of a wireless base station is combined to send a signal that can be authenticated. When it is so authenticated, the control transaction is executed.

In WO93/09621, an automatic identification control apparatus initiates an authentication procedure between itself and a portable electronic apparatus and if it is successful operates a piece of equipment to be controlled.

### SUMMARY

These and other drawbacks and difficulties found in authentication systems, for example computer systems, are overcome according to the present invention as defined in claims 1 and 13. According to exemplary embodiments of the present invention, a SIM card contained in a mobile telephone is associated with a user's computer account using a secure technique which exchanges identification information between the computer and the SIM. When the mobile telephone is powered on, the user is required to enter a Personal Identification Number (PIN). When the user of a mobile telephone, who has entered the correct PIN comes into communication with a computer, the mobile telephone exchanges the identification information with the computer and, if the user is authorised, the user is automatically logged onto the computer. Accordingly, the user only needs to memorise a short PIN in order to perform the authentication needed to log onto a computer.

In accordance with various embodiment described herein, the communication link between the computer and the mobile telephone can comprise a short-range wireless radio communications link, an infrared wireless communication link, or a cable connecting the computer and the mobile telephone. Alternatively, the communications link can be established when the mobile telephone is inserted into a telephone battery charger located in proximity to the computer.

Further, exemplary embodiments of the present invention provide a method of configuring the mobile telephone and the computer system so the computer system associates the user of the mobile telephone with a user name and password stored in the computer system.

### BRIEF DESCRIPTION OF THE DRAWINGS

The foregoing objects, features and advantages of the present invention will be more readily understood upon reading the following detailed description in conjunction with the drawings in which:
Figure 1 illustrates the authentication system according to an exemplary embodiment of the present invention;
Figure 2 illustrates an exemplary method for configuration of the mobile telephone and the computer system;
Figure 3 illustrates an exemplary database record for storage and retrieval of a SIM ID and public key associated with a particular subscriber;
Figure 4 illustrates a exemplary arrangement which allows a mobile telephone to logon to a computer system of the present invention; and
Figure 5 illustrates an exemplary method for logging on to a computer system using a mobile telephone.

### DETAILED DESCRIPTION

In the following description, for purposes of explanation and not limitation, specific details are set forth, such as particular circuits, circuit components, and techniques, in order to provide a thorough understanding of the present invention. However, it will be apparent to one skilled in the art that the present invention may be practiced in other embodiments that depart from these specific details. In other instances, detailed descriptions of well-known methods, devices, and circuits are omitted so as not to obscure the description of the present invention.

The exemplary embodiments provide illustrative examples relating to mobile telephones which operate according to the GSM standard. However, those skilled in the art will appreciate that the concepts disclosed herein are equally applicable to mobile telephones which operate according to other standards. Likewise, some of the exemplary embodiments provide illustrative examples relating SIM cards for providing subscriber identification information, however, the techniques described herein are equally applicable to other methods of providing subscriber identification information in a mobile telephone.

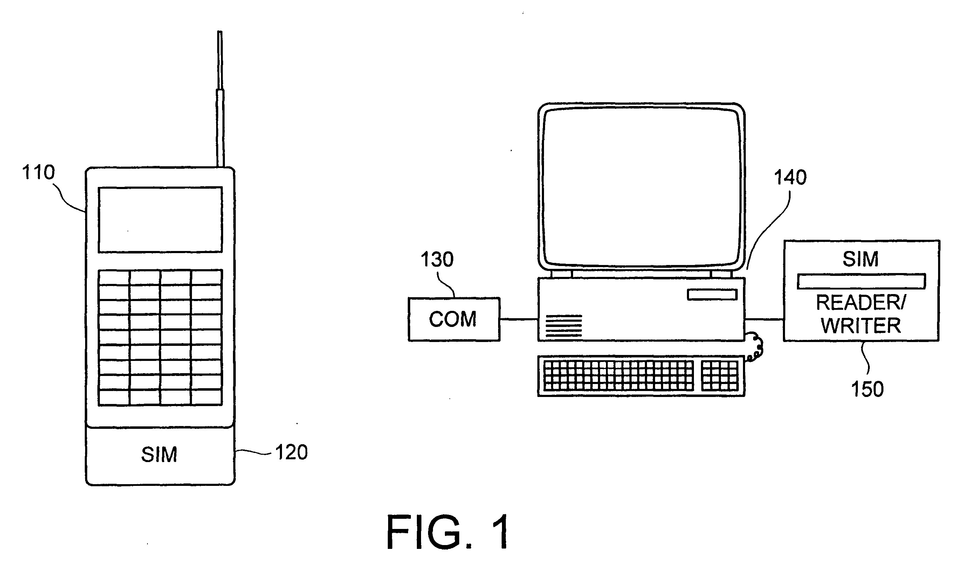

Figure 1 illustrates an exemplary embodiment of the hardware which is used to implement the present invention. A user inserts SIM 120 into mobile telephone 110. SIM 120 provides information necessary for the mobile telephone 110 to operate in the mobile network. When the mobile telephone 110 is powered on, the user is prompted for a PIN which would allow the user to operate the telephone. If the PIN entered by the user matches the PIN stored in SIM 120, then the user is able to operate mobile telephone 110.

Computer 140 can be any type of computer such as a "Wintel" computer comprising an Intel processor and using a Microsoft Windows operating system. However, one skilled in the art will recognize that the computer could also use processors made by any manufacturer, e.g., Cyrix or AMD, Motorola, and any type of operating system, e.g., Unix and Apple's Macintosh operating system. Typically, for a user to access the operating system and application files which are stored on computer 140, the user must be logged onto the computer 140. Typical logon procedures include a graphical user interface form with blanks for a user to enter a logon identification and a password. Once a user has enter the correct logon identification and password the user will be logged onto the computer 140.

In order for a user to implement the present invention, the computer system and the mobile telephone can be configured such that the user account or identity of mobile telephone 110 is associated with a user account or identity of the computer 140 (or a computer network). More specifically, SIM 120 will be associated with the account of a user of computer 140. According to an exemplary embodiment of the present invention, computer 140 runs Windows NT and the SIM can run programs written in the Java programming language.

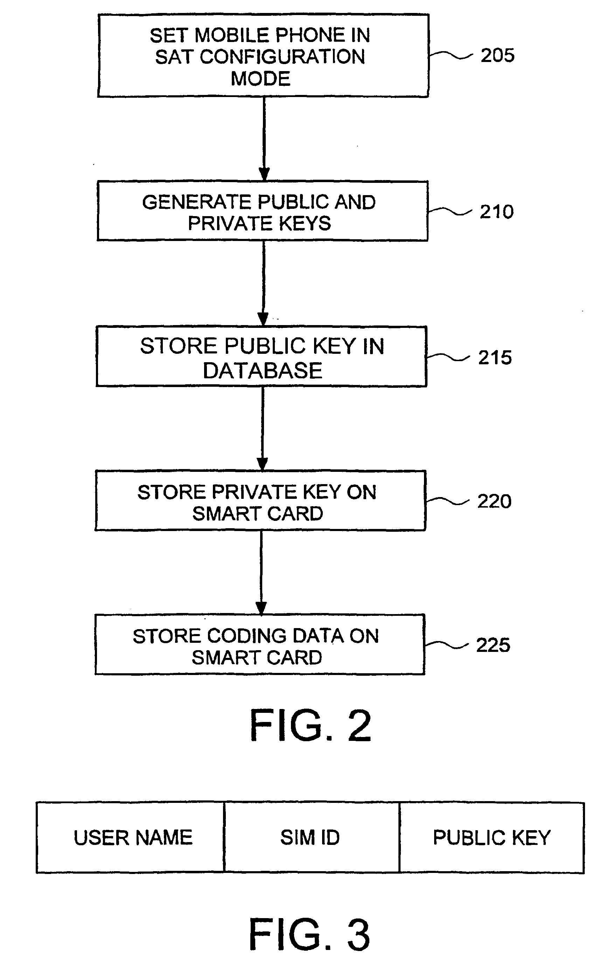

Figure 2 illustrates an exemplary method for configuration of the system. Accordingly, in step 205 the mobile telephone is set in a mode wherein information can be written into the SIM, e.g., the SAT configuration mode. According to an exemplary embodiment of the present invention, SIM 120 contains a SIM application toolkit (SAT). SAT is a development environment incorporated in the GSM standard for writing programs which run on SIMs. To install the program which generates the public and private keys onto SIM 120, SIM 120 is inserted into smart card reader/writer 150. One skilled in the art will recognize that smart card reader/writer is only needed to install the programs which run on SIM 120, e.g., the program which generates public and private keys. Accordingly, to automatically logon to a PC according to the present invention does not require each computer to have a smart card reader/writer. The mobile telephone can be set in the SAT configuration mode by selecting the configure SAT option from the menu of functions available on the mobile telephone and by entering the correct PIN, i.e., an administrative PIN used for configuration of the mobile telephone. Alternatively, the PIN used for setting the mobile telephone in the SAT configuration mode may be the same PIN used to activate the mobile telephone.

In step 210, the computer 140 generates a set of public and private keys. The public key is stored in an administrative database in computer 140, or in a computer network, in accordance with step 215. Figure 3 illustrates a purely exemplary database record for storage and retrieval of a SIM ID and public key associated with a particular user. In step 220, the private key is stored on the SIM 120. In addition the various parameters for coding data transferred between the mobile telephone 110 and the computer 140, are stored on the SIM 120, in accordance with step 225. The various parameters are the numbers used in the RSA algorithm, e.g., two prime numbers.

Once the system has been configured to associate the SIM with one or more user accounts/identities of the computer system and the user of mobile telephone 110 has entered the PIN into the mobile telephone 110, the user may automatically log onto computer 140. Accordingly, the user will engage a communications link between mobile telephone 110 and computer 140 to transfer authentication/identity information there between. According to an exemplary embodiment, the communication link between mobile telephone 110 and computer 140 is established via short range radio communications technology such as "Bluetooth" which is described in "Bluetooth--The Universal Radio Interface for Ad Hoc, Wireless Connectivity" by Jaap Haartsen, Ericsson Review, No. 3, 1998.

Of course those skilled in the art will appreciate that any other type of communication link can be employed. According to the exemplary embodiment using "Bluetooth", the user need only enter an area within the radio range of the computer for a communications link to be engaged between the mobile telephone and the computer. According to this embodiment, computer 140, has a communication unit 130 attached to it, in order to communicate via the short range radio communications.

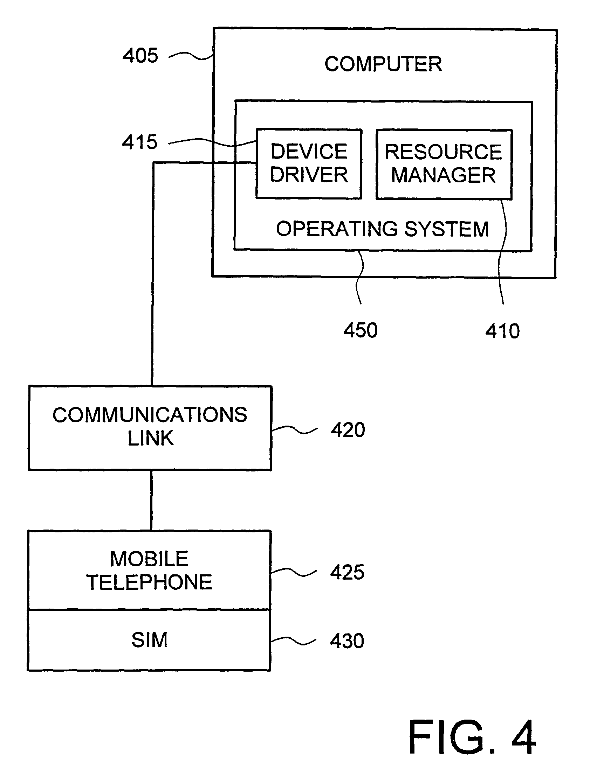

Figure 4 illustrates an exemplary arrangement which allows a mobile telephone user to logon to a computer system according to the present invention. Computer 405 is running an operating system 450, wherein one of the components of the operating system is resource manager 410. A smart card device driver 415 interfaces between the operating system 450 running on computer 405, and SIM 430, as illustrated in figure 4. In an exemplary embodiment, computer 140 is running an operating system which uses Microsoft Smart Card Technology. Microsoft Smart Card Technology is currently available for the following operating systems, Microsoft Windows 95, Windows 98, NT 4 and NT 5. Additionally, future versions of Microsoft operating systems are expected to support the Smart Card Technology. Smart Card Technology uses a resource manager to manage and control all applications access to the smart card. Microsoft Smart Card Technology is described in "Smart Cards White Paper", Microsoft Corporation, April 24, 1998. Although an exemplary embodiment of the present invention is described herein with reference to the Windows NT operating system, one skilled in the art will recognize that the present invention can be implemented using any type of operating system which has the ability, or can be modified, to communicate with smart cards. Device driver 415 and resource manager 410 are components of the Smart Card Technology. Accordingly, one skilled in the art will recognize that in other operating system environments, the operating system components responsible for logon will perform functions similar to those described herein with regard to the device driver 415 and the resource manager 410. Device driver 415 communicates with mobile telephone 425 through communications link 420. Identification and authentication information are exchanged between SIM 430, via mobile telephone 425, and the computer 405, via device driver 415. Accordingly, device driver 415 translates information received from mobile telephone 425 into a form which is compatible with resource manager 410, and also translates data from resource manager 410 into a form which mobile telephone 425 can convey to SIM 430.

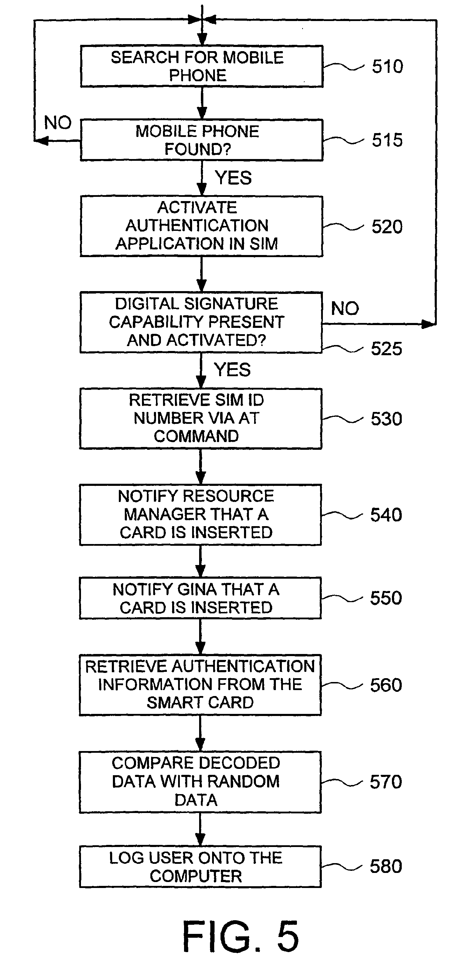

An exemplary method for logging onto a computer system using a SIM in a mobile telephone is illustrated in Figure 5. In step 510, one of the computer and the activated mobile telephone recognize a proximity to the other. According to one exemplary embodiment this is accomplished by the computer detecting a short range signal emitted by the mobile telephone. Alternatively, the mobile telephone can detect a short range signal emitted by the computer. In step 515, the computer determines whether a mobile telephone has been found. If the computer does not find a mobile telephone, in accordance with the "NO" path out of decision step 515, then the computer returns to step 510 to search for a mobile telephone. If a mobile telephone is found by the computer, in accordance with the "YES" path out of decision step 515, then components of the smart card technology on the Windows NT computer sends an instruction to the mobile telephone to activate the authentication application in the SIM, in accordance with step 520.

In step 525, the computer queries the mobile telephone using an AT command to determine whether the detected mobile telephone has the capability of generating a digital signature and whether such capability has been activated in the mobile telephone. AT stands for attention, and AT commands are standard commands used for serial communication with computers. The digital signature is a string of bits which is produced by the RSA algorithm using the private key and a random string of bits. The digital signature is used to uniquely, and securely, identify the mobile telephone. According to an exemplary embodiment of the present invention, the mobile telephone will have an option on one of its menus to activate and deactivate the sending of a digital signature. If the digital signature capability is not activated, in accordance with the "NO" path out of decision step 525, then the system returns to step 510 and the computer continues to search for mobile telephones.

If the digital signature capability has been activated by the mobile telephone, in accordance with the "YES" path out of decision step 525, then the smart card driver 415 sends an AT command to the mobile telephone requesting the SIM ID number, in accordance with step 530. After the SIM ID is returned from the mobile telephone to the computer, the smart card driver 415 notifies the resource manager 410 that a SIM card is inserted in the mobile telephone in accordance with step 540. The resource manager 410 notifies a graphical identification and authentication dynamic-link library (GINA) that a card is inserted, in accordance with step 550. GINA allows developers to implement smart-card authentication mechanisms in place of the standard Windows NT user name and password authentication.

In step 560, GINA retrieves the authentication information from the SIM. Step 560 involves GINA calling the Crypto applications program interface (CryptoAPI), which results in data transfer between the card and the smart card driver. This data transfer involves the smart card driver sending (via a transceiver device connected to computer 405), a random pattern of bits to the SIM. This information can, for example, be stored in the SMS (short message service) memory of the mobile telephone. The SIM card in the mobile telephone encodes the random data using the RSA algorithm and with the private key. The coded data, i.e., the digital signature, is sent back to the smart card driver. The encrypted random bits are decrypted by either the smart card driver or the CryptoAPI service provider using the SIM's public key. The decrypted random bits are compared to the transmitted random bits, in accordance with step 570. If the data matches then the user is logged onto the computer in accordance with step 580. The logon procedure of step 580 is completed by GINA in cooperation with other components of the authentication system, e.g., LAN Security Architecture (LSA), Kerbos, Key Distribution Center (KDC).

Although the description above describes logging onto a computer, one skilled in the art will recognize that the invention is equally applicable to logging onto computer networks or any device which requires authentication. Further, although communications unit 130 is shown as a separate peripheral from computer 140, one of ordinary skill in the art will recognize that communications unit 130 can be incorporated in a PC card design and mounted inside of computer 140. In addition, although the exemplary embodiments describe the use of a PIN to activate the mobile telephone, the mobile telephone can also be activated by conventional voice activation systems.

Although the exemplary embodiment is discussed wherein the communications link between computer 140 and mobile telephone 110 is a radio communications link, the present invention can be practiced with any type of communications link between the computer and mobile telephone. Accordingly, the communications link may be a cable attached between the two devices, e.g., an RS-232 cable. Alternatively, the communications link may be an IrDA link, i.e., an infrared link whose standards are defined by the Infrared Data Association. According to an exemplary embodiment, the authentication could be performed when the mobile telephone 110 is inserted into a cradle which recharges the mobile telephone's battery. In addition to being connected to a power source, the cradle is connected to the computer through any of the various communications links described herein. Additionally, when a user of the mobile telephone, who has already logged onto a computer, moves out of range of the computer, the user may be automatically logged off of the computer. Alternatively, when the mobile telephone moves out of range a password protected screen saver could be initiated to protect the computer users data.

While the present invention has been described using the forgoing exemplary embodiments, these embodiments are intended to be illustrative in all respects, rather than restrictive of the present invention. Thus, the scope of the present invention is instead set forth by the appended claims.

## Claims

1. A method for automatically logging a mobile telephone user onto a computer network comprising the steps of:
entering a personal identification number (PIN) when the mobile telephone (110) is powered on;
activating the mobile telephone (110) if the entered personal identification number (PIN) matches a personal identification number (PIN) stored on a subscriber identity module (120) in said mobile telephone (110);
searching (510) for a mobile telephone from a computer (140) connected to said computer network;
determining (525), by said computer (140), whether the mobile telephone (110) has been set in an automatic logon mode, wherein the mobile telephone (110) is set in an automatic logon mode if a digital signature capability is present and is activated in the mobile telephone (110);
requesting (530) by said computer (140) if the digital signature capability is present and activated in the mobile telephone (110) an identification number of the mobile telephone (110);
performing (540, 550, 560, 570), after the personal identification number is returned from the mobile telephone (110), an authentication procedure between the mobile telephone and computer; and
automatically logging (560) the mobile telephone user onto the computer network if the authentication procedure is successful.

2. A method in accordance with claim 1, wherein the identification number is a subscriber identification module number stored on a smart card in the mobile telephone.

3. A method in accordance with claim 1, wherein the step of checking an identification number of the mobile telephone comprises the step of:
retrieving (530) the identification number using an AT command.

4. A method in accordance with claim 1, wherein the authentication procedure comprises the steps of:
notifying an operating system component (450) which is responsible for logon that a card is inserted in the mobile telephone;
retrieving and analysing authentication information from the card; and
logging the user onto the computer if the authentication information is valid.

5. A method in accordance with claim 4, wherein the step of retrieving and analysing authentication information comprises the steps of:
sending a random string of bits to the mobile telephone (110);
encoding, in the mobile telephone (110), the random string of bits with a private key;
returning the encoded random string of bits to the computer (140); and
decoding, in the computer (140), the encoded string of bits using a public key.

6. A method in accordance with claim 5, wherein the authentication information is valid when the string of bits decoded by the public key matches the random string of bits sent to the mobile telephone (110).

7. A method in accordance with claim 1, wherein the computer (140) and the mobile telephone (110) exchange information through a wireless communication channel.

8. A method in accordance with claim 7, wherein the wireless communication channel is a short range radio frequency channel.

9. A method in accordance with claim 7, wherein the wireless communication channel is an infrared communications channel.

10. A method in accordance with claim 1, wherein the computer (140) and the mobile telephone (110) exchange information through a cable.

11. A method in accordance with claim 1, further comprising the step of:
automatically logging the user off of the computer network when the mobile telephone (110) is a predetermined distance from said computer (140), wherein the predetermined distance is a range of a radio signal produced by the computer (140).

12. A method in accordance with claim 1, further comprising the step of:
initiating a password protected screen saver on the computer (140) when the mobile telephone (110) is a predetermined distance from said computer, wherein the predetermined distance is a range of a radio signal produced by the computer (140).

13. A system for automatically logging a mobile telephone user onto a computer network comprising:
means for entering a personal identification number (PIN) when the mobile telephone (110) is powered on;
means for activating the mobile telephone (110) if the entered personal identification number (PIN) matches a personal identification number (PIN) stored on a subscriber identity module (120) in said mobile telephone (110) with means for before each step;
means for searching for a mobile telephone (110) from a computer (140) connected to said computer network;
means for determining, by said computer (140), whether the mobile telephone (110) has been set in an automatic logon mode, wherein the mobile telephone (110) is set in an automatic logon mode if a digital signature capability is present and is activated in the mobile telephone (110);
means for requesting by said computer (140), if the digital signature capability is present and activated in the mobile telephone (110), an identification number of the mobile telephone (110);
means for performing, after the personal identification number is returned from the mobile telephone (110), an authentication procedure between the mobile telephone (110) and the computer (140); and
means for automatically logging the mobile telephone user onto the computer network if the authentication procedure is successful.

14. A system in accordance with claim 13, wherein the identification number is a subscriber identification module number stored on a smart card (120) in the mobile telephone (110).

15. A system in accordance with claim 13, wherein the means for checking an identification number of the mobile telephone (110) comprises:
means for retrieving the identification number using an AT command.

16. A system in accordance with claim 13, wherein the means for performing an authentication procedure comprises:
means for notifying an operating system component which is responsible for logon that a card is inserted in the mobile telephone (110);
means for retrieving and analysing authentication information from the card; and
means for logging the user onto the computer if the authentication information is valid.

17. A system in accordance with claim 16, wherein the means for retrieving and analysing authentication information comprises:
means for sending a random string of bits to the mobile telephone (110);
means for encoding, in the mobile telephone (110), the random string of bits with a private key;
means for returning the encoded random string of bits to the computer (140); and
means for decoding, the computer (140), the encoded string of bits using a public key.

18. A system in accordance with claim 17, wherein the authentication information is valid when the string of bits decoded by the public key matches the random string of bits sent to the mobile telephone(110);

19. A system in accordance with claim 13, wherein the computer (140) and the mobile telephone (110) exchange information through a wireless communication channel.

20. A system in accordance with claim 19, wherein the wireless communication channel is a short range radio frequency channel.

21. A system in accordance with claim 19, wherein the wireless communication channel is an infrared communications channel.

22. A system in accordance with claim 13, wherein the computer and the mobile telephone exchange information through a cable.

23. A system in accordance with claim 13, further comprising:
means for automatically logging the user off of the computer network when the mobile telephone (110) is a predetermined distance from said computer (140), wherein the predetermined distance is a range of a radio signal produced by the computer (140).

24. A system in accordance with claim 13, further comprising:
means for initiating a password protected screen saver on the computer (140) when the mobile telephone (110) is a predetermined distance from said computer (140), wherein the predetermined distance is a range of a radio signal produced by the computer (140).

## Patentansprüche

1. Verfahren zum automatischen Anmelden eines Mobiltelefonbenutzers an ein Computernetzwerk umfassend folgende Schritte:
Eingeben einer persönlichen Identifizierungsnummer (PIN), wenn das Mobiltelefon (110) eingeschaltet wird;
Aktivieren des Mobiltelefons (110), wenn die eingegebene persönliche Identifizierungsnummer (PIN) mit einer persönlichen Identifizierungsnummer (PIN) übereinstimmt, die in einem Teilnehmeridentitätsmodul (120) im Mobiltelefon (110) gespeichert ist;
Suchen (510) eines Mobiltelefons durch einen mit dem Computernetzwerk verbundenen Computer (140);
Bestimmen (525) durch den Computer (140), ob das Mobiltelefon (110) in einen automatischen Anmeldebetrieb geschaltet worden ist, wobei das Mobiltelefon (110) in einen automatischen Anmeldebetrieb geschaltet wird, wenn eine digitale Signaturfähigkeit vorhanden ist und im Mobiltelefon (110) aktiviert wird;
Anfordern (530) einer Identifizierungsnummer des Mobiltelefons (110) durch den Computer (140), wenn die digitale Signaturfähigkeit im Mobiltelefon vorhanden und im Mobiltelefon (110) aktiviert ist;
Durchführen (540, 550, 560, 570) eines Authentizitätsvorgangs zwischen dem Mobiltelefon und dem Computer, nachdem die persönliche Identifizierungsnummer vom Mobiltelefon (110) zurückgegeben worden ist; und automatisches Anmelden (560) des Mobiltelefonbenutzers an das Computernetzwerk, wenn der Authentizitätsvorgang erfolgreich ist.

2. Verfahren nach Anspruch 1, bei dem die Identifizierungsnummer eine Teilnehmer-Identifizierungsmodulnummer ist, welche auf einer Smartcard im Mobiltelefon gespeichert ist.

3. Verfahren nach Anspruch 1, bei dem der Schritt des Prüfens einer Identifikationsnummer des Mobiltelefons den Schritt des Abrufens (530) der Identifizierungsnummer unter Verwendung eines AT-Befehls umfasst.

4. Verfahren nach Anspruch 1, bei dem der Authentizitätsvorgang folgende Schritte umfasst:
Melden an eine für das Anmelden verantwortliche Betriebssystemkomponente (450), dass eine Karte in das Mobiltelefon eingesetzt worden ist;
Abrufen und Analysieren der Authentizitätsinformation von der Karte; und
Anmelden des Benutzers an den Computer, wenn die Authentizitätsinformation gültig ist.

5. Verfahren nach Anspruch 4, bei dem der Schritt des Abrufens und Analysieren der Authentizitätsinformation folgende Schritte umfasst:
Senden einer willkürlichen Bitfolge zum Mobiltelefon (110) ;
Codieren der willkürlichen Bitfolge mit einem privaten Schlüssel im Mobiltelefon (110);
Rückführen der codierten willkürlichen Bitfolge zum Computer (140); und
Decodieren der codierten Bitfolge unter Verwendung eines öffentlichen Schlüssels im Computer (140).

6. Verfahren nach Anspruch 5, bei dem die Authentizitätsinformation gültig ist, wenn die durch den öffentlichen Schlüssel decodierte Bitfolge mit der zum Mobiltelefon (110) gesendeten willkürlichen Bitfolge übereinstimmt.

7. Verfahren nach Anspruch 1, bei dem der Computer (140) und das Mobiltelefon (110) Information über einen drahtlosen Kommunikationskanal austauschen.

8. Verfahren nach Anspruch 7, bei dem der drahtlose Kommunikationskanal ein Nahbereichs-Hochfrequenzkanal ist.

9. Verfahren nach Anspruch 7, bei dem der drahtlose Kommunikationskanal ein Infrarot-Kommunikationskanal ist.

10. Verfahren nach Anspruch 1, bei dem der Computer (140) und das Mobiltelefon (110) Information über ein Kabel austauschen.

11. Verfahren nach Anspruch 1, umfassend den folgenden Schritt:
automatisches Abmelden des Benutzers vom Computernetzwerk, wenn das Mobiltelefon (110) sich in einem vorgegebenen Abstand vom Computer (140) befindet, wobei der vorgegebene Abstand ein Bereich eines durch den Computer (140) erzeugten Hochfrequenzsignals ist.

12. Verfahren nach Anspruch 1, weiterhin umfassend folgenden Schritt:
Initiieren eines durch ein Passwort geschützten Bildschirmschoners auf dem Computer (140), wenn das Mobiltelefon (140) sich in einem vorgegebenen Abstand vom Computer befindet, wobei der vorgegebene Abstand ein durch den Computer (140) erzeugter Bereich eines Hochfrequenzsignals ist.

13. System zum automatischen Anmelden eines Mobiltelefonbenutzers an ein Computernetzwerk, umfassend:
Mittel zur Eingabe einer persönlichen Identifizierungsnummer (PIN), wenn das Mobiltelefon (110) eingeschaltet wird;
Mittel zum Aktivieren des Mobiltelefons (110), wenn die eingegebene persönliche Identifizierungsnummer (PIN) mit einer persönlichen Identifizierungsnummer (PIN) übereinstimmt, die in einem Teilnehmeridentitätsmodul (120) im Mobiltelefon gespeichert ist;
Mittel zum Suchen eines Mobiltelefons (110) durch einen mit dem Computernetzwerk verbundenen Computer (140);
Mittel zum Bestimmen durch den Computer (140), ob das Mobiltelefon (110) in einen automatischen Anmeldebetrieb geschaltet worden ist, wobei das Mobiltelefon (110) in einen automatischen Anmeldebetrieb geschaltet wird, wenn eine digitale Signaturfähigkeit vorhanden ist und im Mobiltelefon (110) aktiviert wird;
Mittel zur Anforderung einer Identifizierungsnummer des Mobiltelefons (110), wenn die digitale Signaturfähigkeit vorhanden und im Mobiltelefon (110) aktiviert ist, Mittel zur Durchführung eines Authentizitätsvorgangs zwischen dem Mobiltelefon (110) und dem Computer (140), nachdem die persönliche Identifizierungsnummer vom Mobiltelefon (110) zurückgegeben worden ist; und
Mittel zur automatischen Anmeldung des Mobiltelefonbenutzers an das Computernetzwerk, wenn der Authentizitätsvorgang erfolgreich ist.

14. System nach Anspruch 13, bei dem die Identifizierungsnummer eine Teilnehmer-Identifizierungsmodulnummer ist, welche auf einer Smartcard (120) im Mobiltelefon (110) gespeichert ist.

15. System nach Anspruch 13, bei dem die Mittel zum Prüfen einer Identifizierungsnummer Mittel zum Abrufen der Identifizierungsnummer unter Verwendung eines AT-Befehls umfassen.

16. System nach Anspruch 13, bei dem die Mittel zur Durchführung eines Authentizitätsvorgangs:
Mittel zum Melden an eine auf einen Anmeldevorgang ansprechende Funktionssystemkomponente, dass eine Karte in das Mobiltelefon (110) eingesetzt ist;
Mittel zum Abrufen einer analysierenden Authentizitätsinformation von der Karte; und
Mittel zum Anmelden des Benutzers an den Computer, wenn die Authentizitätsinformation gültig ist, umfassen.

17. System nach Anspruch 16, bei dem die Mittel zum Abrufen und Analysieren der Authentizitätsinformation
Mittel zur Aussendung einer willkürlichen Bitfolge an das Mobiltelefon (110);
Mittel zur Codierung der willkürlichen Bitfolge mit einem privaten Schlüssel im Mobiltelefon (110) ;
Mittel zur Rückführung der codierten willkürlichen Bitfolge zum Computer (140); und
Mittel zur Decodierung der codierten Bitfolge unter Verwendung eines öffentlichen Schlüssels im Computer (140)
umfassen.

18. System nach Anspruch 17, bei dem die Authentizitätsinformation gültig ist, wenn die durch den öffentlichen Schlüssel decodierte Bitfolge mit der zum Mobiltelefon (110) gesendeten willkürlichen Bitfolge übereinstimmt.

19. System nach Anspruch 13, bei dem der Computer (140) und das Mobiltelefon (110) Information über einen drahtlosen Kommunikationskanal austauschen.

20. System nach Anspruch 19, bei dem der drahtlose Kommunikationskanal ein Nahbereich-Hochfrequenzkanal ist.

21. System nach Anspruch 19, bei dem der drahtlose Kommunikationskanal ein Infrarot-Kommunikationskanal ist.

22. System nach Anspruch 13, bei dem der Computer und das Mobiltelefon Information über ein Kabel austauschen.

23. System nach Anspruch 13 weiterhin umfassend:
Mittel zum automatischen Abmelden des Benutzers vom Computernetzwerk, wenn das Mobiltelefon (110) sich in einem vorgegebenen Abstand vom Computer (140) befindet, wobei der vorgegebene Abstand ein Bereich eines durch den Computer (140) erzeugten Hochfrequenzsignals ist.

24. System nach Anspruch 13, weiterhin umfassend:
Mittel zur Initiierung eines durch ein Passwort geschützten Bildschirmschoners auf dem Computer (140), wenn sich das Mobiltelefon (110) in einem vorgegebenen Abstand vom Computer (140) befindet, wobei der vorgegebene Abstand ein Bereich eines durch den Computer (140) erzeugten Hochfrequenzsignals ist.

## Revendications

1. Procédé d'ouverture automatique de session d'un utilisateur de téléphone mobile sur un réseau informatique comprenant les étapes suivantes :
entrée d'un numéro personnel d'identification (PIN pour "Personal Identification Number") lorsque le téléphone mobile (110) est mis sous tension ;
activation du téléphone mobile (110) si le numéro personnel d'identification (PIN) entré concorde avec le numéro personnel d'identification (PIN) stocké sur un module d'identité d'abonné (120) dans ledit téléphone mobile (110) ;
recherche (510) d'un téléphone mobile à partir d'un ordinateur (140) connecté audit réseau informatique ;
détermination (525) par ledit ordinateur (140) du fait que le téléphone mobile (110) a ou non été configuré dans un mode d'ouverture de session automatique, le téléphone mobile (110) étant configuré dans un mode d'ouverture de session automatique si une fonctionnalité de signature numérique est présente et activée dans le téléphone mobile (110) ;
demande (530) par ledit ordinateur (140), si la fonctionnalité de signature numérique est présente et activée dans le téléphone mobile (110), d'un numéro d'identification du téléphone mobile (110) ;
exécution (540, 550, 560, 570), après que le numéro d'identification personnel a été renvoyé par le téléphone mobile (110), d'une procédure d'authentification entre le téléphone mobile et l'ordinateur ; et
ouverture de session automatique (560) de l'utilisateur du téléphone mobile sur le réseau informatique si la procédure d'authentification réussit.

2. Procédé selon la revendication 1, dans lequel le numéro d'identification est un numéro de module d'identification d'abonné stocké sur une carte à puce dans le téléphone mobile.

3. Procédé selon la revendication 1, dans lequel :
l'étape de vérification d'un numéro d'identification du téléphone mobile comprend l'étape suivante :
extraction (530) du numéro d'identification au moyen d'une commande AT.

4. Procédé selon la revendication 1, dans lequel la procédure d'authentification comprend les étapes suivantes :
indication à un composant du système d'exploitation (450) qui est responsable de l'ouverture de session du fait qu'une carte est insérée dans le téléphone mobile ;
extraction et analyse d'informations d'authentification provenant de la carte ; et
ouverture de session de l'utilisateur sur l'ordinateur si les informations d'authentification sont valides.

5. Procédé selon la revendication 4, dans lequel l'étape d'extraction et d'analyse d'informations d'authentification comprend les étapes suivantes :
envoi d'une chaîne aléatoire de bits au téléphone mobile (110) ;
codage, dans le téléphone mobile (110), de la chaîne aléatoire de bits avec une clé privée ;
renvoi de la chaîne aléatoire codée de bits à l'ordinateur (140) ; et
décodage, dans l'ordinateur (140), de la chaîne codée de bits en utilisant une clé publique.

6. Procédé selon la revendication 5, dans lequel les informations d'authentification sont valides lorsque la chaîne de bits décodée par la clé publique concorde avec la chaîne aléatoire de bits envoyée au téléphone mobile (110).

7. Procédé selon la revendication 1, dans lequel l'ordinateur (140) et le téléphone mobile (110) échangent des informations par l'intermédiaire d'un canal de communication sans fil.

8. Procédé selon la revendication 7, dans lequel le canal de communication sans fil est un canal radiofréquence de faible portée.

9. Procédé selon la revendication 7, dans lequel le canal de communication sans fil est un canal de communication infrarouge.

10. Procédé selon la revendication 1, dans lequel l'ordinateur (140) et le téléphone mobile (110) échangent des informations par l'intermédiaire d'un câble.

11. Procédé selon la revendication 1, comprenant en outre l'étape suivante :
fermeture automatique de la session de l'utilisateur sur le réseau informatique lorsque le téléphone mobile (110) est à une distance prédéterminée dudit ordinateur (140), la distance prédéterminée étant une portée d'un signal radio produit par l'ordinateur (140).

12. Procédé selon la revendication 1, comprenant en outre l'étape suivante :
lancement d'un économiseur d'écran protégé par mot de passe sur l'ordinateur (140) lorsque le téléphone mobile (110) est à une distance prédéterminée dudit ordinateur, la distance prédéterminée étant une portée d'un signal radio produit par l'ordinateur (140).

13. Système pour ouvrir automatiquement une session d'un utilisateur de téléphone mobile sur un réseau informatique, comprenant :
un moyen d'entrée d'un numéro personnel d'identification (PIN) lorsque le téléphone mobile (110) est mis sous tension ;
un moyen d'activation du téléphone mobile (110) si le numéro personnel d'identification (PIN) entré concorde avec le numéro personnel d'identification (PIN) stocké sur un module d'identité d'abonné (120) dans ledit téléphone mobile (110) avec un moyen destiné à cela avant chaque étape ;
un moyen de recherche d'un téléphone mobile (110) à partir d'un ordinateur (140) connecté audit réseau informatique ;
un moyen de détermination, par ledit ordinateur (140), du fait que le téléphone mobile (110) a ou non été configuré dans un mode d'ouverture de session automatique, le téléphone mobile (110) étant configuré dans un mode d'ouverture de session automatique si une fonctionnalité de signature numérique est présente et activée dans le téléphone mobile (110) ;
un moyen de demande, à partir dudit ordinateur (140), si la fonctionnalité de signature numérique est présente et activée dans le téléphone mobile (110), d'un numéro d'identification du téléphone mobile (110) ;
un moyen d'exécution, après que le numéro personnel d'identification a été renvoyé par le téléphone mobile (110), d'une procédure d'authentification entre le téléphone mobile (110) et l'ordinateur (140) ; et
un moyen d'ouverture automatique d'une session de l'utilisateur du téléphone mobile sur le réseau informatique si la procédure d'authentification réussit.

14. Système selon la revendication 13, dans lequel le numéro d'identification est un numéro de module d'identification d'abonné stocké sur une carte à puce (120) dans le téléphone mobile (110).

15. Système selon la revendication 13, dans lequel le moyen de vérification d'un numéro d'identification du téléphone mobile (110) comprend :
un moyen d'extraction du numéro d'identification au moyen d'une commande AT.

16. Système selon la revendication 13, dans lequel le moyen d'exécution d'une procédure d'authentification comprend :
un moyen d'indication à un composant d'un système d'exploitation qui est responsable de l'ouverture de session, du fait qu'une carte est insérée dans le téléphone mobile (110) ;
un moyen d'extraction et d'analyse d'informations d'authentification provenant de la carte ; et
un moyen d'ouverture de session de l'utilisateur sur l'ordinateur si les informations d'authentification sont valides.

17. Système selon la revendication 16, dans lequel le moyen d'extraction et d'analyse d'informations d'authentification comprend :
un moyen d'envoi d'une chaîne aléatoire de bits au téléphone mobile (110) :
un moyen de codage, dans le téléphone mobile (110), de la chaîne aléatoire de bits avec une clé privée ;
un moyen de renvoi de la chaîne aléatoire codée de bits à l'ordinateur (140) ; et
un moyen de décodage, dans l'ordinateur (140), de la chaîne codée de bits au moyen d'une clé publique.

18. Système selon la revendication 17, dans lequel les informations d'authentification sont valides lorsque la chaîne de bits décodée par la clé publique concorde avec la chaîne aléatoire de bits envoyée au téléphone mobile (110).

19. Système selon la revendication 13, dans lequel l'ordinateur (140) et le téléphone mobile (110) échangent des informations par l'intermédiaire d'un canal de communication sans fil.

20. Système selon la revendication 19, dans lequel le canal de communication sans fil est un canal radiofréquence de faible portée.

21. Système selon la revendication 19, dans lequel le canal de communication sans fil est un canal de communication infrarouge.

22. Système selon la revendication 13, dans lequel l'ordinateur et le téléphone mobile échangent des informations par l'intermédiaire d'un câble.

23. Système selon la revendication 13, comprenant en outre :
un moyen de fermeture automatique de la session de l'utilisateur sur le réseau informatique lorsque le téléphone mobile (110) est à une distance prédéterminée dudit ordinateur (140), la distance prédéterminée étant une portée d'un signal radio produit par l'ordinateur (140).

24. Système selon la revendication 13, comprenant en outre :
un moyen pour lancer un économiseur d'écran protégé par mot de passe sur l'ordinateur (140) lorsque le téléphone mobile (110) est à une distance prédéterminée dudit ordinateur (140), la distance prédéterminée étant une portée du signal radio produit par l'ordinateur (140).
